(19) Europäisches Patentamt
European Patent Office
Office européen des brevets

(11) **EP 3 311 481 B1**

(12) **EUROPÄISCHE PATENTSCHRIFT**

(45) Veröffentlichungstag und Bekanntmachung des Hinweises auf die Patenterteilung:
**17.07.2019 Patentblatt 2019/29**

(51) Int Cl.:
*H02P 9/48* (2006.01)    *F03D 9/00* (2016.01)
*H02J 3/18* (2006.01)

(21) Anmeldenummer: **15750699.9**

(22) Anmeldetag: **11.08.2015**

(86) Internationale Anmeldenummer:
**PCT/EP2015/068441**

(87) Internationale Veröffentlichungsnummer:
**WO 2017/025131 (16.02.2017 Gazette 2017/07)**

(54) **VERFAHREN ZUR REGELUNG EINES SELBSTGEFÜHRTEN UMRICHTERS, SELBSTGEFÜHRTER UMRICHTER SOWIE ANORDNUNG ZUR ÜBERTRAGUNG ELEKTRISCHER LEISTUNG**

METHOD FOR CONTROLLING A VOLTAGE SOURCE INVERTER, VOLTAGE SOURCE INVERTER, AND INSTALLATION FOR TRANSFERRING ELECTRICAL ENERGY

PROCÉDÉ DE COMMANDE D'UN CONVERTISSEUR DE SOURCE DE TENSION, CONVERTISSEUR DE SOURCE DE TENSION, ET INSTALLATION DE TRANSFERT D'ÉNERGIE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**25.04.2018 Patentblatt 2018/17**

(73) Patentinhaber: **Siemens Aktiengesellschaft 80333 München (DE)**

(72) Erfinder:
- **CHRIST, Timo 91322 Gräfenberg (DE)**
- **SEMAN, Slavomir 90480 Nürnberg (DE)**
- **ZUROWSKI, Rainer 91301 Forchheim (DE)**

(56) Entgegenhaltungen:
DE-A1-102012 222 948    KR-B1- 101 044 631
US-A1- 2008 001 411

**Beschreibung**

Die Erfindung betrifft ein Verfahren zur Regelung eines selbstgeführten Umrichters, der wechselspannungsseitig über ein induktives Bauteil mit einem Wechselspannungsnetz verbindbar ist, bei dem aus einer wechselspannungsseitig des Umrichters gemessenen Netzspannung und einem am Umrichter gemessenen Umrichterstrom ein Leistungsistwert und ein Frequenzistwert ermittelt werden, eine Wirkleistungsregeldifferenz als Differenz zwischen einem Wirkleistungsanteil des Leistungsistwertes und einem vorgegebenen Wirkleistungssollwert gebildet wird und eine Frequenzregeldifferenz als Differenz zwischen dem Frequenzistwert und einem vorgegebenen Frequenzsollwert gebildet wird, mittels eines Orthogonalreglers ein Orthogonalanteil einer Umrichterstellspannug in Abhängigkeit von der Wirkleistungsregeldifferenz bestimmt wird, wobei mittels des Orthogonalanteils eine zwischen dem Umrichter und dem Wechselspannungsnetz ausgetauschte Wirkleistung bestimmt wird, mittels eines Parallelreglers ein Parallelanteil der Umrichterstellspannung in Abhängigkeit von der Wirkleistungsregeldifferenz bestimmt wird, wobei mittels des Parallelanteils eine zwischen dem Umrichter und dem Wechselspannungsnetz ausgetauschte Blindleistung bestimmt wird.

Ein solches Verfahren ist aus der WO 2015/024583 A1 bekannt. Das bekannte Verfahren wird zum Regeln eines selbstgeführten Umrichters eingesetzt, der gleichspannungsseitig mit einer Windkraftanlage und wechselspannungsseitig mit einem Wechselspannungsnetz verbunden ist, das eine Mehrzahl von Windkraftanlagen eines Windparks miteinander verbindet.

Mit Hilfe des bekannten Verfahrens ist die Übertragung von Leistung mittels des selbstgeführten Umrichters regelbar. Mit dem Begriff "Leistung" ist dabei eine Scheinleistung gemeint, die sowohl einen Wirk- als auch Blindleistungsanteil umfasst. Das Wechselspannungsnetz ist über eine Gleichspannungsverbindung mit einem Versorgungsnetz verbunden. Die Gleichspannungsverbindung der WO 2015/024583 A1 umfasst einen Diodengleichrichter, der über ein Gleichspannungsnetz mit einem weiteren Umrichter verbunden ist, der an das Versorgungsnetz angeschlossen ist. Dieser Umrichter ist ein selbstgeführter Umrichter, ein so genannter Voltage Source Converter (VSC).

Bei dem bekannten Verfahren bauen die Umrichter der Windenergieanlagen eines Windparks selbstständig das Wechselspannungsnetz mit der gewünschten Amplitude und Netzfrequenz auf, über das der Windpark beispielsweise mit dem besagten Diodengleichrichter oder einem anderen netzgeführten Umrichter verbunden ist. Dabei ist jeder selbstgeführte Umrichter über ein induktives Bauteil mit einem allen Umrichtern gemeinen Ankopplungspunkt des Wechselspannungsnetzes verbunden. Jeder selbstgeführte Umrichter, der mit Hilfe des bekannten Verfahrens geregelt wird, ist beispielsweise in der Gondel der jeweiligen Windenergieanlage angeordnet. Ein induktives Bauteil ist ein Transformator, eine Drossel, eine Spule oder dergleichen.

Weitere Verfahren zur Umrichterregelung sind aus der US 2008 001 411 und der DE 10 2012 222948 A1 bekannt.

Die Aufgabe der vorliegenden Erfindung ist es, das bekannte Verfahren hinsichtlich der Netzstabilität des Wechselspannungsnetzes weiter zu verbessern.

Die Aufgabe wird gemäß dem Verfahrensanspruch 1 dadurch gelöst, dass die Frequenzregeldifferenz dem Parallelregler zugeführt wird, so dass die Bestimmung des Parallelanteils der Umrichterstellspannung in Abhängigkeit von der Frequenzregeldifferenz erfolgt.

Durch die Verknüpfung einer Leistungsregelung mit einer Frequenzregelung im Parallelregler kann bei der erfindungsgemäßen Regelung vorteilhaft eine Stabilisierung des gesamten Wechselspannungsnetzes erreicht werden.

Im Rahmen der Erfindung werden zunächst die Netzspannung und der Umrichterstrom gemessen. Die Ermittlung der Messwerte der Netzspannung und des Umrichterstroms kann beispielsweise wie in der WO 2015/024583 A1 beschrieben erfolgen.

Sowohl die Netzspannung als auch der Umrichterstrom sind Wechselgrößen. Zur Ermittlung des aktuellen Leistungsistwertes werden die Netzspannung und der Umrichterstrom daher rechnerisch weiterbehandelt. Beispielsweise wird ein Spannungsistwert mittels eines Tiefpassfilters (LFT) und einer anschließenden diskreten Fouriertransformation (DFT) aus der Netzspannung gewonnen. Über eine darauf folgende inverse DFT (IDFT) kann anschließend (für jede Phase) ein Spannungsistwert der Netzspannung ermittelt werden. Entsprechend kann auch ein Stromistwert ermittelt werden. Der Spannungsistwert und der Stromistwert sind jeweils durch komplexe Größen repräsentiert, aus denen in bekannter Weise der Leistungsistwert berechnet werden kann. Der Realteil des Leistungsistwertes entspricht dem Wirkleistungsanteil des Leistungsistwertes; der Imaginärteil des Leistungsistwertes entspricht einem Blindleistungsanteil des Leistungsistwertes. Aus dem vorbestimmten Wirkleistungssollwert und dem Wirkleistungsanteil des Leistungsistwertes kann die Wirkleistungsregeldifferenz gebildet werden.

Gemäß der Erfindung setzt sich die am Umrichter einzustellende Umrichterstellspannung aus den nachfolgend beschriebenen komplexen Komponenten:
Der Parallelanteil der Umrichterstellspannung zeichnet sich dadurch aus, dass die Richtung des entsprechenden Vektors in der Darstellung in der komplexen Ebene der Richtung des komplexen Vektors des Spannungsistwertes entspricht. Der Parallelanteil setzt sich geeigneterweise aus einem Vorsteuer-Parallelanteil und einem Korrekturanteil des Parallelanteils zusammen, wobei der Vorsteuer-Parallelanteil direkt aus dem Spannungsistwert und der Korrekturanteil als Ausgangswert des Parallelreglers gewonnen werden. Der Korrekturanteil des Parallelanteils entspricht einer Anpassung der Umrichterstellspannung aufgrund von resistiven, also durch Elemente mit resistiver Charakteristik, wie beispielsweise Widerständen im Wechselspannungsnetz, bewirkten Spannungsänderungen. Der Parallelanteil der Umrichterstellspannung bewirkt einen dazu um pi/2 (90°) phasenversetzten Strom am Umrichter, der damit auch gegenüber der Netzspannung um pi/2 phasenversetzt ist. Daher regelt der Parallelanteil den Blindleistungsaustausch am Umrichter.

Der Orthogonalanteil der Umrichterstellspannung zeichnet sich dadurch aus, dass die Richtung des entsprechenden Vektors in der Darstellung in der komplexen Ebene bezüglich der Richtung des Spannungsistwertes um pi/2 gedreht, also senkrecht dazu ist. Der Orthogonalanteil setzt sich geeigneterweise aus einem Vorsteuer-Orthogonalanteil und einem Korrekturanteil des Orthogonalanteils zusammen. Der Korrekturanteil des Orthogonalanteils kann als Ausgangswert des Orthogonalreglers gewonnen werden. Der Orthogonalanteil der Umrichterstellspannung bewirkt einen zur Netzspannung parallelen Strom am Umrichter. Daher regelt der Orthogonalanteil den Wirkleistungsaustausch am Umrichter.

Die Summe aus dem Parallelanteil und dem Orthogonalanteil ergibt wiederum einen Vektor in der komplexen Ebene, der durch einen Betrag und eine Phase beschrieben werden kann. Diese Phase wird im Folgenden mit Phi bezeichnet.

Die Phase Phi kann ferner um eine Phasenkorrektur PhiKorr korrigiert werden. Geeigneterweise wird die Phasenkorrektur mittels einer Frequenzregelung ermittelt, wobei die Phasenkorrektur in Abhängigkeit von der Frequenzregeldifferenz ermittelt wird.

Insgesamt gilt für die Umrichterstellspannung Ustell die folgende Beziehung:

```
Ustell =  | UparallelFF + UparallelKor + Uorthogonal | * exp(
i * ( Phi + PhiKorr ) ).                   (1)
```

UparallelFF bezeichnet dabei den Vorsteuer-Parallelanteil, UparallelKor den Korrekturanteil des Parallelanteils, Uorthogonal den Orthogonalanteil, PhiKorr die Phasenkorrektur, exp die Exponentialfunktion und i die imaginäre Einheit.

Die Umrichterstellspannung wird geeigneterweise an eine Steuereinheit des Umrichter geleitet. Mittels der Steuereinheit werden aus der Umrichterstellspannung Steuersignale für die einzelnen Leistungshalbleiterschalter des Umrichters erzeugt.

Die Sollgrößen der Regelung, wie der Wirkleistungssollwert und der Frequenzsollwert, sind beispielsweise von einer zentralen Steuerungseinrichtung vorgegeben. Dabei kann es sich bei einer Anwendung in einem Windpark zweckmäßigerweise um einen Windparkpiloten handeln.

Vorzugsweise wird ein Eingangswert des Parallelreglers als Summe der Wirkleistungsregeldifferenz und der Frequenzregeldifferenz gebildet. Umfasst der Parallelregler einen Proportionalregler, so kann der Eingangswert in diesem Fall beispielsweise dem Proportionalregler zugeführt werden.

Bevorzugt wird die Wirkleistungsregeldifferenz mit einem Parallelkorrekturparameter multipliziert, bevor die Summe der Wirkleistungsregeldifferenz und der Frequenzregeldifferenz gebildet wird.

Weiter bevorzugt umfasst der Parallelregler einen Integralregler, dem die Frequenzregeldifferenz zugeführt wird. Zweckmäßigerweise werden die Ausgangswerte des Proportionalreglers und des Integralreglers zur Bildung des Parallelanteils der Umrichterstellspannung summiert.

Gemäß einer Ausführungsform des erfindungsgemäßen Verfahrens wird dem Umrichter eine Statik für eine Regelgröße zugeordnet, die durch einen Statik-Parameter charakterisiert ist, und der Statik-Parameter für eine Korrektur der Frequenzregeldifferenz verwendet. Geeigneterweise ist die Statik eine Blindleistungs-Frequenz-Statik. Auf diese Weise wird eine Beziehung zwischen der Frequenz und der Blindleistung im Wechselspannungsnetz eingeführt. Die Statik ist dabei eine lineare Kennlinie, in diesem Fall zwischen Blindleistung und Frequenz.

Die Erfindung betrifft ferner einen selbstgeführten Umrichter zum Übertragen elektrischer Leistung zwischen einer Gleichspannungsleitung und einem Wechselspannungsnetz mit einer Regelungseinrichtung zur Regelung der übertragenen Leistung.

Die Aufgabe der Erfindung ist, einen solchen Umrichter vorzuschlagen, der einen möglichst stabilen Betrieb erlaubt.

Die Aufgabe wird dadurch gelöst, dass beim erfindungsgemäßen Umrichter die Regelungseinrichtung zur Durchführung des erfindungsgemäßen Verfahrens eingerichtet ist.

Die Vorteile des erfindungsgemäßen Umrichters ergeben sich insbesondere aus der Möglichkeit der Durchführung des zuvor beschriebenen erfindungsgemäßen Verfahrens.

Die Erfindung betrifft ferner eine Anordnung zum Übertragen elektrischer Leistung mit einer ersten Gruppe von Umrichtern, wobei jeder der Umrichter der ersten Gruppe gleichspannungsseitig mit einer Energieerzeugungsanlage und wechselspannungsseitig über ein induktives Bauteil mit einem allen Umrichtern der ersten Gruppe gemeinsamen ersten Wechselspannungsnetz verbindbar ist.

Eine solche Anordnung ist bereits aus der zuvor genannten Druckschrift WO 2015/024583 A1 bekannt.

Die Aufgabe der Erfindung besteht darin, eine artgemäße Anordnung vorzuschlagen, deren Betrieb möglichst stabil ist. Die Aufgabe wird bei der erfindungsgemäßen Anordnung dadurch gelöst, dass wenigstens einer der Umrichter ein erfindungsgemäßer selbstgeführter Umrichter ist.

Gemäß einer bevorzugten Ausführungsform der erfindungsgemäßen Anordnung umfasst die Anordnung eine zweite Gruppe von Umrichtern, wobei jeder der Umrichter der zweiten Gruppe gleichspannungsseitig mit einer Energieerzeugungsanlage und wechselspannungsseitig über ein weiteres induktives Bauteil mit einem allen Umrichtern der zweiten Gruppe gemeinsamen zweiten Wechselspannungsnetz verbindbar ist, wobei wenigstens einer der Umrichter der zweiten Gruppe ein erfindungsgemäßer selbstgeführter Umrichter ist, wobei das erste Wechselspannungsnetz mittels eines ersten netzgeführten Umrichters und das zweite Wechselspannungsnetz mittels eines zweiten netzgeführten Umrichters mit einer die beiden netzgeführten Umrichter verbindenden Gleichspannungsleitung verbunden sind. Das erste und das zweite Wechselspannungsnetz mit den jeweils über die Umrichter angeschlossenen Energieerzeugungsanlagen definieren ein erstes und ein zweites Cluster. Bei den Clustern kann es sich beispielsweise um zwei Windparks handeln, die offshore, also in einem Meer und voneinander entfernt angeordnet sind. Die Cluster sind über eine Gleichspannungsleitung miteinander verbunden. Um die Wechselspannung der Wechselspannungsnetze in eine Gleichspannung umzuwandeln, ist die Ankopplung der Wechselspannungsnetze über netzgeführte Umrichter realisiert.

Ein Vorteil der erfindungsgemäßen Anordnung ist, dass die selbstgeführten Umrichter ohne einen zwingenden Informationsaustausch untereinander geregelt werden können, so dass eine Stabilisierung der Wechselspannungsnetze erreicht ist. Auf diese Weise kann auf aufwändige Datenübertragungsleitungen zwischen den Clustern verzichtet werden.

Die räumliche Entfernung zwischen den Clustern und insbesondere zwischen den netzgeführten Umrichtern kann daher größer als 5 km, auch größer als 10 km sein.

Die Energieerzeugungsanlage kann beispielsweise eine Windkraftanlage, eine Photovoltaik-Anlage oder eine andere Anlage zur Erzeugung erneuerbarer Energie sein. Das induktive Bauteil ist geeigneterweise ein Transformator. Die Anbindung der selbstgeführten Umrichters an das zugeordnete Wechselspannungsnetz erfolgt zweckmäßigerweise über einen Schalter, der gegebenenfalls die Verbindung zwischen dem Umrichter und dem Wechselspannungsnetz trennen kann.

Vorzugsweise sind die beiden netzgeführten Umrichter ungeregelte Gleichrichter. Solche Gleichrichter sind besonders kostengünstig und wartungsarm. Ungeregelte Gleichrichter können beispielsweise Diodengleichrichter sein.

Die Erfindung betrifft ferner ein Verfahren zur Regelung des Leistungsflusses in der zuvor beschriebenen Anordnung.

Die Aufgabe der Erfindung besteht darin, ein solches Verfahren anzugeben, das einen möglichst stabilen Betrieb der Anordnung ermöglicht.

Die Aufgabe wird dadurch gelöst, dass der wenigstens eine Umrichter der ersten Gruppe und der wenigstens eine Umrichter der zweiten Gruppe gemäß dem erfindungsgemäßen Verfahren geregelt werden, wobei dem wenigstens einen Umrichter der ersten Gruppe und dem wenigstens einem Umrichter der zweiten Gruppe jeweils eine Statik für eine Regelgröße zugeordnet wird, die durch einen Statik-Parameter charakterisiert ist, und der Statik-Parameter für eine Korrektur der Frequenzregeldifferenz verwendet wird, wobei der dem wenigstens einen Umrichter der ersten Gruppe zugeordnete Statik-Parameter und der dem wenigstens einen Umrichter der zweiten Gruppe zugeordnete Statik-Parameter unterschiedliche Werte aufweisen. Mittels des erfindungsgemäßen Verfahrens können vorteilhaft größere Frequenzabweichungen in den Wechselspannungsnetzen zugelassen werden, wodurch die Fähigkeit zur Spannungshaltung durch die Blindleistung erhöht wird.

Insbesondere können jedem selbstgeführten Umrichter der ersten Gruppe und jedem selbstgeführten Umrichter der zweiten Gruppe Statik-Parameter zugeordnet werden. Die Statik-Parameter der Umrichter der ersten Gruppe weisen alle den gleichen, ersten Wert auf, die Statik-Parameter der Umrichter der zweiten Gruppe weisen alle dem gleichen, zweiten Wert auf, wobei der erste Wert ungleich dem zweiten Wert ist. Auf diese Weise kann erreicht werden, dass die Umrichter der ersten Gruppe alle mit einem gleichen Anteil an Blindleistungsübertragung bei deren Schwankungen beteiligt sind. Entsprechendes gilt auch für die Umrichter der zweiten Gruppe. Die Umrichter der beiden Gruppen agieren jedoch unabhängig voneinander.

Die Erfindung soll im Folgenden anhand des in den Figuren 1 bis 3 dargestellten Ausführungsbeispiels näher erläutert werden.

Figur 1 zeigt ein Ausführungsbeispiel einer erfindungsgemäßen Anordnung zum Übertragen elektrischer Leistung in einer schematischen Darstellung;

Figur 2 zeigt ein Zeigerdiagramm für eine Umrichterspannung;

Figur 3 zeigt ein Ausführungsbeispiel des erfindungsgemäßen Regelungsverfahrens in schematischer Darstellung.

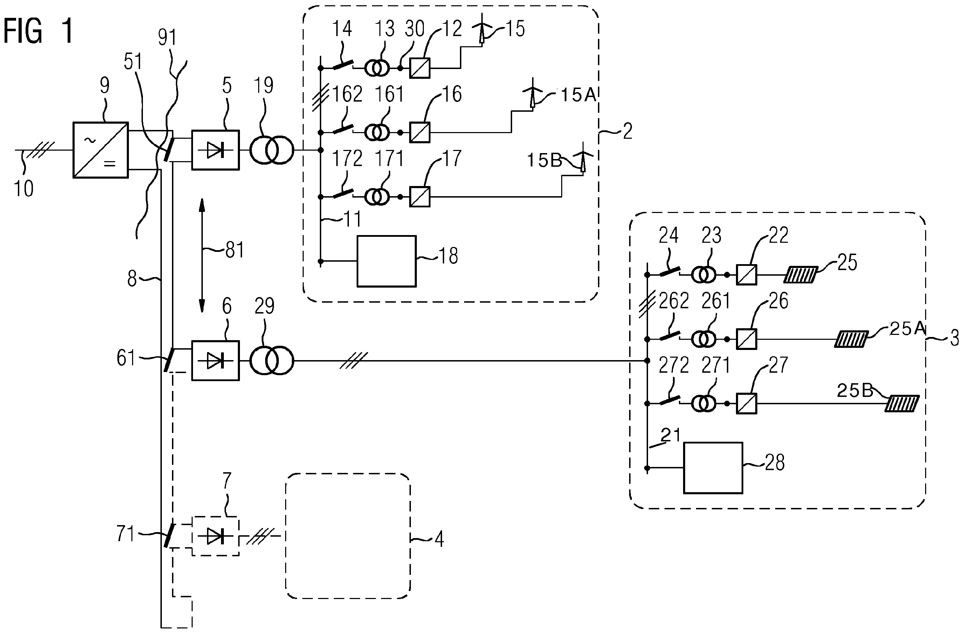

Im Einzelnen zeigt Figur 1 ein Ausführungsbeispiel einer Anordnung 1 zum Übertragen elektrischer Leistung.

Die Anordnung 1 umfasst ein erstes Cluster 2, ein zweites Cluster 3 sowie ein drittes Cluster 4, wobei in Figur 1 angedeutet ist, dass darüber hinaus die Anordnung 1 noch weitere, in Figur 1 nicht dargestellte Cluster umfassen kann.

Das erste Cluster 2 umfasst ein erstes, dreiphasiges Wechselspannungsnetz 11. Ein selbstgeführter Umrichter 12 ist wechselspannungsseitig über ein induktives Bauteil in Form eines Transformators 13 und über eine Schaltvorrichtung 14 mit dem ersten Wechselspannungsnetz 11 verbindbar. Gleichspannungsseitig ist der Umrichter 12 mit einer oder mehreren Energieerzeugungseinrichtungen verbunden. Im in Figur 1 dargestellten Ausführungsbeispiel ist der Umrichter 12 mit einer Windkraftanlage 15 verbunden. Dabei kann der Umrichter 12 beispielsweise in einem Turm der Windkraftanlage 15 oder auf einer separaten oder mit dem Turm der Windkraftanlage 15 verbundenen Plattform angeordnet sein. Der Umrichter 12 ist mit einem in die Windkraftanlage integrierten Gleichrichter (in Figur 1 nicht dargestellt) verbunden. Das erste Cluster 2 umfasst weitere selbstgeführte Umrichter 16 und 17, die über ihnen zugeordnete Transformatoren 161 bzw. 171 und Schaltvorrichtungen 162 bzw. 172 mit dem ersten Wechselspannungsnetz 11 verbindbar sind. Aus Übersichtlichkeitsgründen sind in der Figur 1 lediglich drei selbstgeführte Umrichter 12, 16 und 17 dargestellt, die eine erste Gruppe von Umrichtern bilden. Es ist jedoch selbstverständlich möglich, dass jedes der Cluster 2, 3, 4 eine beliebige Anzahl von Umrichtern umfasst. Das erste Cluster 2 umfasst ferner eine Speichervorrichtung 18, die zum Speichern elektrischer Energie eingerichtet ist. Die Speichervorrichtung 18 kann demnach dazu verwendet werden, das erste Wechselspannungsnetz 11 weiter zu stabilisieren oder nach einem Zusammenbruch des ersten Wechselspannungsnetzes 11 dieses wieder aufzubauen ("black start"). Das erste Cluster 2 ist auf hoher See angeordnet und bildet somit einen sogenannten offshore-Windpark.

Das zweite Cluster 3 umfasst ein zweites, dreiphasiges Wechselspannungsnetz 21. Ein selbstgeführter Umrichter 22 ist wechselspannungsseitig über ein induktives Bauteil in Form eines Transformators 23 und über eine Schaltvorrichtung 24 mit dem zweiten Wechselspannungsnetz 21 verbindbar. Gleichspannungsseitig ist der Umrichter 22 mit einer oder mehreren Energieerzeugungseinrichtungen verbunden. Im in Figur 1 dargestellten Ausführungsbeispiel ist der Umrichter 22 mit einer Photovoltaikanlage 25 verbunden. Das zweite Cluster 3 umfasst weitere selbstgeführte Umrichter 26 und 27, die über ihnen zugeordnete Transformatoren 261 bzw. 271 und Schaltvorrichtungen 262 bzw. 272 mit dem zweiten Wechselspannungsnetz 21 verbunden sind. Das zweite Cluster 3 umfasst ferner eine Speichervorrichtung 28, deren Funktion derjenigen der Speichervorrichtung 18 entspricht. Die Photovoltaikanlagen 25-27 können selbstredend auch durch Windkraftanlagen ersetzt werden, so dass das zweite Cluster 3 beispielsweise einen weiteren offshore-Windpark bildet.

Das erste Cluster 2 ist über einen Transformator 19 mit einem ungeregelten Gleichrichter 5 verbunden. Der Gleichrichter 5 ist gleichspannungsseitig an eine Gleichspannungsleitung 8 angeschlossen. Mittels eines Überbrückungsschalters 51 kann der Gleichrichter 5 gleichspannungsseitig überbrückt werden. Entsprechend ist das zweite Cluster 3 ebenfalls über einen Transformator 29 mit einem ihm zugeordneten ungeregelten Gleichrichter 6 verbunden, der gleichspannungsseitig mit der Gleichspannungsleitung 8 verbunden ist. Mittels eines Überbrückungsschalters 61 ist der Gleichrichter 6 gleichspannungsseitig überbrückbar. Die ungeregelten Gleichrichter 5, 6 sowie der weitere ungeregelte Gleichrichter 7 zum Anbinden des dritten Clusters 4 bilden eine gleichspannungsseitige Reihenschaltung. Die Entfernung zwischen den ungeregelten Gleichrichtern 5 und 6 kann mehrere Kilometer betragen, im dargestellten Ausführungsbeispiel beträgt sie etwa 10 km, was durch einen Doppelpfeil 81 angedeutet ist.

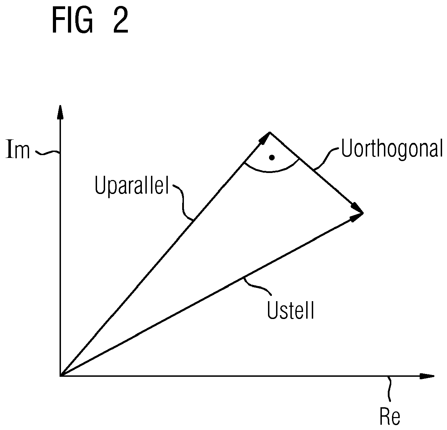

Die Gleichspannungsleitung 8 ist mit einem selbstgeführten Umrichter 9 verbunden, der beispielsweise an Land angeordnet ist, wobei die Uferlinie in Figur 2 mittels einer geschwungenen Linie 91 angedeutet ist. Der Umrichter 9 ist wechselspannungsseitig mit einem Energieversorgungsnetz 10 verbunden.

Um einen stabilen Betrieb der Energieerzeugungseinrichtungen 15, 25 sowie eine stabile Energieübertragung zwischen den Energieerzeugungseinrichtungen 15, 25 und dem Energieversorgungsnetz 10 zu gewährleisten, muss der Leistungsfluss in den Wechselspannungsnetzen der Cluster 2, 3, 4 geregelt werden. Für das erste Cluster 2 wird dies durch eine Regelung des Leistungsflusses im ersten Wechselspannungsnetz 11 mittels einer Regelung der Umrichter 12, 16 und 17 umgesetzt. Entsprechend werden auch die übrigen Umrichter der Cluster 3 und 4 geregelt.

Als Regelgrößen werden dazu die Leistung und die Frequenz in dem jeweiligen Wechselspannungsnetz verwendet. Als Stellgröße wird eine an dem jeweiligen Umrichter einzustellende Spannung verwendet, die im Folgenden auch als Umrichterstellspannung bezeichnet wird. Bei einem dreiphasigen System handelt es sich dabei um eine von drei Phasenspannungen. In diesem Fall umfasst die Regelung selbstverständlich drei Stellgrößen.

Die Umrichterstellspannung ist eine komplexe Größe, deren komponentenweise Zusammensetzung in Figur 2 dargestellt ist. Im Einzelnen zeigt Figur 2 ein komplexes Diagramm mit einer reellen Achse Re und einer imaginären Achse Im. In diesem Diagramm ist in einer Vektordarstellung die Umrichterstellspannung Ustell dargestellt. Die Umrichterstellspannung Ustell setzt sich zusammen aus zwei Vektorkomponenten Uparallel und Uorthogonal, wobei Uparallel und Uorthogonal senkrecht zueinander sind. Uparallel ist derart gewählt, dass der zugehörige Vektor parallel zu einer gemessenen Spannung im Wechselspannungsnetz, beispielsweise im ersten Wechselspannungsnetz 11 liegt. Somit entspricht Uparallel einer Blindleistungsübertragung im Wechselspannungsnetz. Entsprechend bestimmt der orthogonale Anteil Uorthogonal der Umrichterstellspannung Ustell eine Wirkleistungsübertragung im Wechselspannungsnetz.

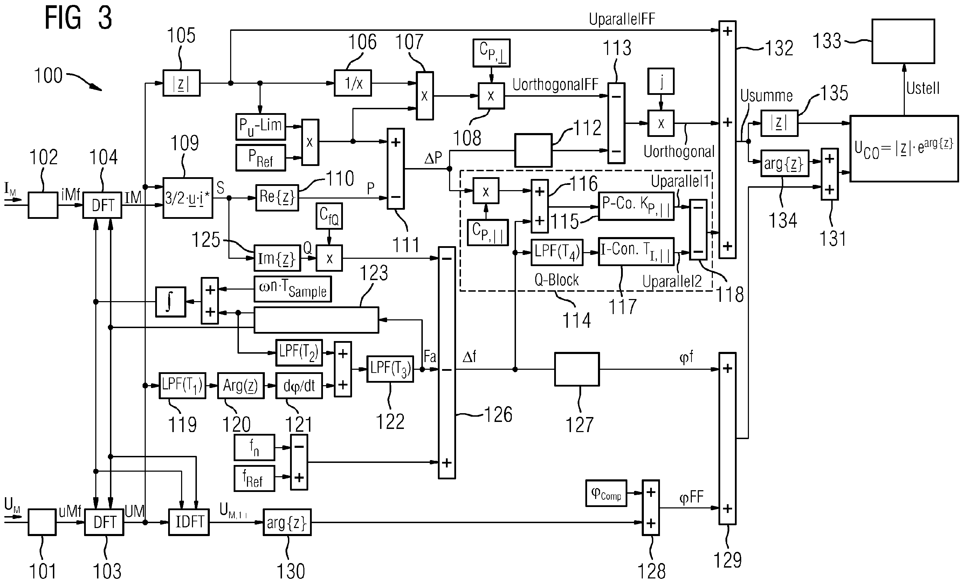

Figur 3 zeigt ein Ausführungsbeispiel des erfindungsgemäßen Verfahrens anhand eines Regeldiagramms. Im dargestellten Beispiel betrifft das Verfahren die Regelung des Umrichters 12 der Figur 1. Das erfindungsgemäße Verfahren kann jedoch auf alle Umrichter einer erfindungsgemäßen Anordnung angewendet werden, insbesondere auf alle übrigen Umrichter 16, 17, 22, 26 und 27 der Figur 1.

Eine Netzspannung uM und ein Umrichterstrom iM werden an einem mit dem Bezugszeichen 30 versehenen Punkt des Wechselspannungsnetzes 11 der Figur 1 mittels geeigneter Messvorrichtungen, wie beispielsweise Messwandler, gemessen und an eine Regelungseinrichtung 100 des Umrichters 12 geleitet.

Die gemessene Netzspannung uM wird einer Filtereinheit 101 zugeführt, beispielsweise einem Bandpassfilter oder einem Glättungsfilter. Entsprechend wird der gemessene Umrichterstorm einer weiteren Filtereinheit 102 zugeführt. An dem Ausgang der Filtereinheit 101 erhält man die gefilterte Netzspannung uMf und den gefilterten Umrichterstrom iMf.

Mittels einer diskreten Fouriertransformation (DFT) wird aus der gefilterten Netzspannung uMf ein komplexer Wert UM der Netzspannung berechnet. Entsprechend wird aus dem gefilterten Umrichterstrom iMf ein komplexer Wert IM des Umrichterstromes berechnet.

Aus dem Wert UM wird ein Vorsteuer-Anteil UparallelFF (vgl. Gleichung (1)) der Umrichterstellspannung Ustell direkt über einen Betragsbildner 105 berechnet.

Ferner wird aus dem komplexen Zeiger UM der Netzspannung durch den Betragsbildner 105 der komplexe Betrag gebildet und durch einen Kehrwertbildner 106 der Kehrwert des Betrages der Netzspannung bestimmt. Durch einen Multiplikator 107 wird der besagte Kehrwert mit einem Wirkleistungssollwert Pref multipliziert und anschließend mit dem Parameter Cp mittels eines Multiplikators multipliziert, so dass ein Vorsteuer-Orthogonalanteil UorthogonalFF gebildet wird.

Der komplexe Zeiger UM sowie der komplex konjugierte Zeiger des Umrichterstromes IM werden zudem einer Scheinleistungsberechnungseinheit 109 zugeführt. Diese stellt ein Ausgangssignal bereit, das der Scheinleistung S entspricht, die über das jeweilige induktive Bauteil (Transformator 13 in dem hier beschriebenen Beispiel) ausgetauscht wird. Die Scheinleistungsberechnungseinheit 109 ist ausgangsseitig mit einem Realteilbildner 110 verbunden, mittels dessen der Realteil der Scheinleistung, also die über das induktive Bauteil ausgetauschte Wirkleistung P ermittelt wird. Ein Addierer 111 berechnet eine Wirkleistungsregeldifferenz ∆P. Die Wirkleistungsregeldifferenz ∆P wird als Eingangsgröße einem Orthogonalregler in Form eines PI-Reglers 112 zugeführt, der ausgangsseitig einen Korrekturanteil UorthogonalKor bereitstellt. Mittels eines Addierers 113 werden die beiden Größen UorthogonalFF und UorthogonalKor addiert, so dass sich der Orthogonalanteil Uorthogonal der Umrichterstellspannung ergibt.

Ferner ist ein Parallelregler 114 bereitgestellt. Der Parallelregler 114 umfasst einen Proportionalregler 115. Als Eingangsgröße für den Proportionalregler 115 dient eine am Ausgang eines Addierers 116 bereitgestellte Summe aus der Wirkleistungsregeldifferenz ∆P, die zuvor mit einem Parallelkorrekturparameter multipliziert wurde, und einer Frequenzregeldifferenz ∆F. Am Ausgang des Proportionalreglers ist eine erste Komponente Uparallel1 des Parallelanteils Uparallel der Umrichterstellspannung Ustell bereitgestellt.

Der Parallelregler 114 umfasst ferner einen Integralregler 117. Die mittels eines Tiefpassglieds 118 gefilterte Frequenzregeldifferenz ∆F wird dem Integralregler 117 zugeführt, der eine zweite Komponente Uparallel2 des Parallelanteils Uparallel der Umrichterstellspannung Ustell berechnet. Die beiden Komponenten Uparallel1 und Uparallel2 werden unter Berechnung des Parallelanteils Uparallel mittels eines Addierers 118 addiert.

Neben der Einstellung der Umrichterstellspannung regelt das erfindungsgemäße Verfahren auch die Frequenz der Netzspannung uM. Mittels eines Tiefpassfilters 119, eines Argumentbildners 120 sowie eines Ableitbausteins 121, dem ein Glättungsglied 122 nachgeschaltet ist, wird aus dem komplexen Raumzeiger UM der Netzspannung die zeitliche Änderung der Netzfrequenz Fa ermittelt. Mit Hilfe der Frequenzänderung Fa wird im Mittelungsfensterbildner 123 die Transformationslänge N für die Mittelung der DFT und der IDFT festgelegt. Die Frequenzänderung Fa und eine vorgegebene Nennfrequenz fn werden von einem Frequenzsollwert fRef im Addierer 124 abgezogen. Die Nennfrequenz fn ist im dargestellten Ausführungsbeispiel gleich 50 Hz oder 60 Hz.

Zugleich wird aus der Scheinleistung S mittels eines Imaginärteilbildners 125 der Imaginärteil der Scheinleistung S ermittelt, der der Blindleistung Q entspricht. Die Blindleistung Q wird mit einem Statik-Parameter CfQ multipliziert, wobei das Produkt ebenfalls vom Frequenzsollwert fRef im Addierer 126 abgezogen wird. Somit ergibt sich am Ausgang des Addierers 126 die Frequenzregeldifferenz ∆F.

Die Frequenzregeldifferenz ∆F wird einerseits, wie zuvor beschrieben, dem Parallelregler und andererseits einem Frequenzregler 127 zugeführt. Der Frequenzregler 127 ist ein PI-Regler, an dessen Ausgang ein Korrekturwert pf für die Phase der Umrichterstellspannung bereitgestellt ist. Der Korrekturwert pf wird mittels weiterer Addierer 128 und 129 zum Ausgang eines Argumentbildners 130 und zu einem Kompensationswinkel pComp addiert. Am Ausgang des Addierers 129 ist damit eine Phasenkorrektur PhiKorr bereitgestellt, die zu einer Korrektur der Phase der Umrichterstellspannung mittels eines entsprechenden Addierers 131 verwendet wird. Bezüglich weiterer Details der Wirkungsweise der Phasenkorrektur wird hierbei auf die Druckschrift WO 2015/024583 A1 verwiesen.

Die Phasenkorrektur PhiKorr wird mittels eines Addierers 131 dem Ausgangswert eins Argumentbildners 134 aufgeschaltet, der die Phase des am Ausgang des Addierers 132 bereitgestelltten Spannungswertes Usumme ermittelt. Die komplexe Amplitude des Spannungswertes Usumme wird mittels eines Betragsbildners 135 berechnet.

Die aus dem Ausgangssignal des Addierers 131 und des Betragsbildners 135 gebildete Umrichterstellspannung Ustell wird einer Steuereinheit 133 des Umrichters 12 zugeführt, der diese in Steuersignale für die Leistungshalbleiterschalter des Umrichters 12 umwandelt.

**Patentansprüche**

1. Verfahren zur Regelung eines selbstgeführten Umrichters (12), der wechselspannungsseitig über ein induktives Bauteil (13) mit einem Wechselspannungsnetz (11) verbindbar ist, bei dem

   - aus einer wechselspannungsseitig des Umrichters (12) gemessenen Netzspannung und einem am Umrichter (12) gemessenen Umrichterstrom ein Leistungsistwert und ein Frequenzistwert ermittelt werden,
   - eine Wirkleistungsregeldifferenz ($\Delta$P) als Differenz zwischen einem Wirkleistungsanteil des Leistungsistwertes und einem vorgegebenen Wirkleistungssollwert gebildet wird und
   - eine Frequenzregeldifferenz ($\Delta$F) als Differenz zwischen dem Frequenzistwert und einem vorgegebenen Frequenzsollwert gebildet wird,
   - mittels eines Orthogonalreglers (112) ein Orthogonalanteil (Uorthogonal) einer Umrichterstellspannug (Ustell) in Abhängigkeit von der Wirkleistungsregeldifferenz ($\Delta$P) bestimmt wird, wobei mittels des Orthogonalanteils (Uorthogonal) eine zwischen dem Umrichter (12) und dem Wechselspannungsnetz (11) ausgetauschte Wirkleistung bestimmt wird,
   - mittels eines Parallelreglers (114) ein Parallelanteil (Uparallel) der Umrichterstellspannung (Ustell) in Abhängigkeit von der Wirkleistungsregeldifferenz ($\Delta$P) bestimmt wird, wobei mittels des Parallelanteils (Uparallel) eine zwischen dem Umrichter (12) und dem Wechselspannungsnetz (11) ausgetauschte Blindleistung bestimmt wird,

   **dadurch gekennzeichnet, dass**
   die Frequenzregeldifferenz ($\Delta$F) dem Parallelregler (114) zugeführt wird, so dass die Bestimmung des Parallelanteils (Uparallel) der Umrichterstellspannung (Ustell) in Abhängigkeit von der Frequenzregeldifferenz ($\Delta$F) erfolgt.

2. Verfahren nach Anspruch 1, wobei ein Eingangswert des Parallelreglers (114) als Summe der Wirkleistungsregeldifferenz ($\Delta$P) und der Frequenzregeldifferenz ($\Delta$F) gebildet wird.

3. Verfahren nach Anspruch 2, wobei die Wirkleistungsregeldifferenz ($\Delta$P) mit einem Parallelkorrekturparameter multipliziert wird, bevor die Summe der Wirkleistungsregeldifferenz ($\Delta$P) und der Frequenzregeldifferenz ($\Delta$F) gebildet wird.

4. Verfahren nach Anspruch 2 oder 3, wobei der Parallelregler (114) einen Proportionalregler (115) umfasst, dem der Eingangswert des Parallelreglers (115) zugeführt wird.

5. Verfahren nach einem der Ansprüche 2 bis 4, wobei der Parallelregler (114) einen Integralregler (117) umfasst, dem die Frequenzregeldifferenz ($\Delta$F) zugeführt wird.

6. Verfahren nach Anspruch 5, wobei die Ausgangswerte des Proportionalreglers (115) und des Integralreglers (117) zur Bildung des Parallelanteils (Uparallel) der Umrichterstellspannung (Ustell) summiert werden.

7. Verfahren nach einem der vorangehenden Ansprüche, wobei dem Umrichter (12) eine Statik für eine Regelgröße zugeordnet wird, die durch einen Statik-Parameter (CfQ) charakterisiert ist, und der Statik-Parameter (CfQ) für eine Korrektur der Frequenzregeldifferenz ($\Delta$F) verwendet wird.

8. Verfahren nach Anspruch 7, wobei die Statik eine Blindleistungs-Frequenz-Statik ist.

9. Selbstgeführter Umrichter (12) zum Übertragen elektrischer Leistung zwischen einer Gleichspannungsleitung (8) und einem Wechselspannungsnetz (11) mit einer Regelungseinrichtung (100) zur Regelung der übertragenen Leistung, wobei die Regelungseinrichtung (100) zur Durchführung des Verfahrens gemäß einem der Ansprüche 1 bis 6 eingerichtet ist.

10. Anordnung (1) zum Übertragen elektrischer Leistung mit einer ersten Gruppe (2) von Umrichtern (12, 16, 17), wobei jeder der Umrichter (12, 16, 17) der ersten Gruppe (2) gleichspannungsseitig mit einer Energieerzeugungsanlage (15, 15A, 15B) und wechselspannungsseitig über ein induktives Bauteil (13, 161, 171) mit einem allen Umrichtern (12, 16, 17) der ersten Gruppe (2) gemeinsamen ersten Wechselspannungsnetz (11) verbindbar ist, wobei wenigstens einer der Umrichter (12, 16, 17) ein selbstgeführter Umrichter (12) gemäß Anspruch 9 ist.

11. Anordnung nach Anspruch 10, wobei die Anordnung eine zweite Gruppe (3) von Umrichtern (22, 26, 27) umfasst, wobei jeder der Umrichter (22, 26, 27) der zweiten Gruppe (3) gleichspannungsseitig mit einer Energieerzeugungsanlage (25, 25A, 25B) und wechselspannungsseitig über ein weiteres induktives Bauteil (23, 261, 271) mit einem allen Umrichtern (22, 26, 27) der zweiten Gruppe (3) gemeinsamen zweiten Wechselspannungsnetz (21) verbindbar ist, wobei wenigstens einer der Umrichter (22, 26, 27) der zweiten Gruppe (3) ein selbstgeführter Umrichter (12) gemäß Anspruch 9 ist, wobei das erste Wechselspannungsnetz (11) mittels eines ersten netzgeführten Umrichters (5) und das zweite Wechselspannungsnetz (21) mittels eines zweiten netzgeführten Umrichters (6) mit einer die beiden netzgeführten Umrichter (5, 6) verbindenden Gleichspannungsleitung (8) verbunden sind.

12. Anordnung nach Anspruch 11, wobei die räumliche Entfernung der beiden netzgeführten Umrichter (5, 6) größer als 5 km ist.

13. Anordnung nach Anspruch 12, wobei die beiden netzgeführten Umrichter (5, 6) ungeregelte Gleichrichter sind.

14. Verfahren zur Regelung des Leistungsflusses in einer Anordnung nach einem der Ansprüche 11 bis 13, bei dem wenigstens ein Umrichter (12, 16, 17) der ersten Gruppe (2) und wenigstens ein Umrichter (22, 26, 27) der zweiten Gruppe (3) gemäß dem Verfahren nach Anspruch 7 geregelt werden, wobei der dem wenigstens einen Umrichter (12, 16, 17) der ersten Gruppe (2) zugeordnete Statik-Parameter (CfQ) und der dem wenigstens einen Umrichter (22, 26, 27) der zweiten Gruppe (3) zugeordnete Statik-Parameter (CfQ) unterschiedliche Werte aufweisen.

**Claims**

1. Method for controlling a self-commutated converter (12), the AC voltage side of which can be connected to an AC voltage grid (11) by means of an inductive component (13), in which

   - an actual power value and an actual frequency value are identified from a grid voltage measured on the AC voltage side of the converter (12) and a converter current measured at the converter (12),
   - an active power control difference ($\Delta P$) is formed as the difference between an active power portion of the actual power value and a prescribed active power setpoint value and
   - a frequency control difference ($\Delta F$) is formed as the difference between the actual frequency value and a prescribed frequency setpoint value,
   - an orthogonal portion (Uorthogonal) of a converter actuating voltage (Ustell) is determined depending on the active power control difference ($\Delta P$) by means of an orthogonal controller (112), wherein an active power exchanged between the converter (12) and the AC voltage grid (11) is determined by means of the orthogonal portion (Uorthogonal),
   - a parallel portion (Uparallel) of the converter actuating voltage (Ustell) is determined depending on the active power control difference ($\Delta P$) by means of a parallel controller (114), wherein a reactive power exchanged between the converter (12) and the AC voltage grid (11) is determined by means of the parallel portion (Uparallel),

   **characterized in that** the frequency control difference ($\Delta F$) is fed to the parallel controller (114) so that the parallel portion (Uparallel) of the converter actuating voltage (Ustell) is determined depending on the frequency control difference ($\Delta F$).

2. Method according to Claim 1, wherein an input value of the parallel controller (114) is formed as the sum of the active power control difference ($\Delta P$) and the frequency control difference ($\Delta F$).

3. Method according to Claim 2, wherein the active power control difference ($\Delta P$) is multiplied by a parallel correction parameter before the sum of the active power control difference ($\Delta P$) and the frequency control difference ($\Delta F$) is formed.

4. Method according to Claim 2 or 3, wherein the parallel controller (114) comprises a proportional controller (115) to which the input value of the parallel controller (114) is fed.

5. Method according to one of Claims 2 to 4, wherein the parallel controller (114) comprises an integral controller (117) to which the frequency control difference (ΔF) is fed.

6. Method according to Claim 5, wherein the output values of the proportional controller (115) and of the integral controller (117) are summed to form the parallel portion (Uparallel) of the converter actuating voltage (Ustell).

7. Method according to one of the preceding claims, wherein a droop for a control variable is associated with the converter (12), said droop being **characterized by** a droop parameter (CfQ), and the droop parameter (CfQ) being used for correcting the frequency control difference (ΔF).

8. Method according to Claim 7, wherein the droop is a reactive power frequency droop.

9. Self-commutated converter (12) for transmitting electrical power between a DC voltage line (8) and an AC voltage grid (11) comprising a control device (100) for controlling the transmitted power, wherein the control device (100) is configured to carry out the method according to one of Claims 1 to 6.

10. Arrangement (1) for transmitting electrical power comprising a first group (2) of converters (12, 16, 17), wherein the DC voltage side of each of the converters (12, 16, 17) of the first group (2) can be connected to an energy generation plant (15, 15A, 15B) and the AC voltage side thereof can be connected to a first AC voltage grid (11) common to all the converters (12, 16, 17) of the first group (2) by means of an inductive component (13, 161, 171), wherein at least one of the converters (12, 16, 17) is a self-commutated converter (12) according to Claim 9.

11. Arrangement according to Claim 10, wherein the arrangement comprises a second group (3) of converters (22, 26, 27), wherein the DC voltage side of each of the converters (22, 26, 27) of the second group (3) can be connected to an energy generation plant (25, 25A, 25B) and the AC voltage side thereof can be connected to a second AC voltage grid (21) common to all the converters (22, 26, 27) of the second group (3) by means of a further inductive component (23, 261, 271), wherein at least one of the converters (22, 26, 27) of the second group (3) is a self-commutated converter (12) according to Claim 9, wherein the first AC voltage grid (11) is connected by means of a first line-commutated converter (5) and the second AC voltage grid (21) is connected by means of a second line-commutated converter (6) to a DC voltage line (8) connecting the two line-commutated converters (5, 6).

12. Arrangement according to Claim 11, wherein the physical distance between the two line-commutated converters (5, 6) is greater than 5 km.

13. Arrangement according to Claim 12, wherein the two line-commutated converters (5, 6) are uncontrolled rectifiers.

14. Method for controlling the flow of power in an arrangement according to one of Claims 11 to 13, in which at least one converter (12, 16, 17) of the first group (2) and at least one converter (22, 26, 27) of the second group (3) are controlled in accordance with the method according to Claim 7, wherein the droop parameter (CfQ) associated with the at least one converter (12, 16, 17) of the first group (2) and the droop parameter (CfQ) associated with the at least one converter (22, 26, 27) of the second group (3) have different values.

**Revendications**

1. Procédé de réglage d'un onduleur (12) à commande autonome, qui peut être relié, du côté de la tension alternative, à un réseau (11) de tension alternative par une pièce (13) inductive, dans lequel

- à partir d'une tension de réseau mesurée du côté de la tension alternative de l'onduleur (12) et d'un courant d'onduleur mesuré à l'onduleur (12), on détermine une valeur réelle de la puissance et une valeur réelle de la fréquence,
- on forme une différence (ΔP) de réglage de la puissance active sous la forme d'une différence entre une composante de puissance active de la valeur réelle de la puissance et une valeur de consigne de puissance active donnée à l'avance,
- on forme une différence (ΔF) de réglage de la fréquence sous la forme d'une différence entre la valeur réelle de la fréquence et une valeur de consigne de fréquence donnée à l'avance,
- au moyen d'un régleur (112) orthogonal, on détermine une composante (Uorthogonal) orthogonale d'une tension (Ustel) de réglage de l'onduleur en fonction de la différence (ΔP) de réglage de la puissance active, dans lequel, au moyen de la composante (Uorthogonal) orthogonale, on détermine une puissance active échangée entre l'onduleur (12) et le réseau (11) de tension alternative,
- au moyen d'un régleur (114) parallèle, on détermine une composante (Uparallel) parallèle de la tension (Ustell) de réglage de l'onduleur, en fonction de la différence ($\Delta$P) de réglage de la puissance active, dans lequel, au moyen de la composante (Uparallel) parallèle, on détermine une puissance réactive échangée entre l'onduleur (12) et le réseau (11) de tension alternative,

**caractérisé en ce que** l'on envoie la différence ($\Delta$F) de la fréquence au régleur (114) parallèle, de manière à effectuer la détermination de la composante (Uparallel) parallèle de la tension (Ustell) de réglage de l'onduleur en fonction de la différence ($\Delta$F) de réglage de la fréquence.

2. Procédé suivant la revendication 1, dans lequel on forme une valeur d'entrée du régleur (114) parallèle comme somme de la différence ($\Delta$P) de la puissance active et de la différence ($\Delta$F) de réglage de la fréquence.

3. Procédé suivant la revendication 2, dans lequel on multiplie la différence ($\Delta$P) de la puissance active par un paramètre de correction parallèle, avant de former la somme de la différence ($\Delta$P) de réglage de la puissance active et de la différence ($\Delta$F) de réglage de la fréquence.

4. Procédé suivant la revendication 2 ou 3, dans lequel le régleur (114) parallèle comprend un régleur (115) proportionnel, auquel on envoie la valeur d'entrée du régleur (115) parallèle.

5. Procédé suivant l'une des revendications 2 à 4, dans lequel le régleur (114) parallèle comprend un régleur (117) intégral, auquel on envoie la différence ($\Delta$F) de réglage de la fréquence.

6. Procédé suivant la revendication 5, dans lequel on somme les valeurs de sortie du régleur (115) proportionnel et du régleur (117) intégral pour former la composante (Uparallel) parallèle de la tension (Ustell) de réglage de l'onduleur.

7. Procédé suivant l'une des revendications précédentes, dans lequel on associe, à l'onduleur (12), une statique d'une grandeur de réglage, qui est **caractérisée par** un paramètre (CfQ) de statique, et on utilise le paramètre (CfQ) de statique pour une correction de la différence ($\Delta$F) de réglage de la fréquence.

8. Procédé suivant la revendication 7, dans lequel la statique est une statique-puissance réactive-fréquence.

9. Onduleur (12) à commande autonome pour transmettre une puissance électrique entre une ligne (8) de tension continue et un réseau (11) de tension alternative, comprenant un dispositif (100) de réglage pour régler la puissance transmise, le dispositif (100) de réglage étant conçu pour effectuer le procédé suivant l'une des revendications 1 à 6.

10. Système (1) de transmission de puissance électrique, comprenant un premier groupe (2) d'onduleurs (12, 16, 17), chacun des onduleurs (12, 16, 17) du premier groupe (2) pouvant être relié, du côté de la tension continue, à une installation (15, 15A, 15B) de production d'énergie et, du côté de la tension alternative par une pièce (13, 161, 171) inductive, à un premier réseau (11) de tension alternative commun à tous les onduleurs (12, 16, 17) du premier groupe (2), au moins l'un des onduleurs (12, 16, 17) étant un onduleur (12) à commande autonome suivant la revendication 9.

11. Système suivant la revendication 10, dans lequel le système comprend un deuxième groupe (3) d'onduleurs (22, 26, 27), chacun des onduleurs (22, 26, 27) du deuxième groupe (3) pouvant être relié, du côté de la tension continue, à une installation (25, 25A, 25B) de production d'énergie et, du côté de la tension alternative par une autre pièce (23, 261, 271) inductive, à un deuxième réseau (21) de tension alternative commun à tous les onduleurs (22, 26, 27) du deuxième groupe (3), au moins l'un des onduleurs (22, 26, 27) du deuxième groupe (3) étant un onduleur (12) à commande autonome suivant la revendication 9, le premier réseau (11) à tension alternative étant relié au moyen d'un premier onduleur (5) à commande par le réseau et le deuxième réseau (21) de tension alternative pouvant être relié au moyen d'un deuxième onduleur (6) à commande par le réseau à une ligne (8) à tension continue reliant les deux onduleurs (5, 6) à commande par le réseau.

12. Système suivant la revendication 11, dans lequel la distance dans l'espace entre les deux onduleurs (15, 16) à commande par le réseau est plus grande que 5 km.

13. Système suivant la revendication 12, dans lequel les deux onduleurs (5, 6) à commande par le réseau sont des redresseurs non-réglés.

14. Procédé de réglage du flux de puissance dans un système suivant l'une des revendications 11 à 13, dans lequel on règle au moins un onduleur (12, 16, 17) du premier groupe (2) et au moins un onduleur (22, 26, 27) du deuxième groupe (3) selon le procédé suivant la revendication 7, dans lequel le paramètre (CfQ) statique associé au au moins un onduleur (12, 16, 17) du premier groupe (2) et le paramètre (CfQ) statique associé au au moins un onduleur (22, 26, 27) du deuxième groupe (3) ont des valeurs différentes.

FIG 1

# FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015024583 A1

- US 2008001411 A
- DE 102012222948 A1